(19) Europäisches Patentamt
European Patent Office
Office européen des brevets

(11) Publication number : 0 510 954 A1

(12) EUROPEAN PATENT APPLICATION

(21) Application number : 92303628.9

(51) Int. Cl.$^5$ : D21C 5/02

(22) Date of filing : 23.04.92

(30) Priority : 25.04.91 US 691210
25.04.91 US 691201

(43) Date of publication of application :
28.10.92 Bulletin 92/44

(84) Designated Contracting States :
AT BE DE FR GB IT NL SE

(71) Applicant : BETZ EUROPE, INC.
Somerton Road
Trevose, PA 19053-6783 (US)

(72) Inventor : Richmann, Sandra K.
2808 South Second Street
Jacksonville, FL 32250 (US)
Inventor : Letscher, Mary Beth
3500 University Boulevard, North, Apt. 1207
Jacksonville, FL 32211 (US)

(74) Representative : W.P. Thompson & Co.
Coopers Building, Church Street
Liverpool L1 3AB (GB)

# (54) Process and composition for deinking dry toner electrostatic printed wastepaper.

(57) A process and composition for deinking electrostatic printed wastepaper is disclosed. The process comprises administering a surfactant to a sample of electrostatic printed wastepaper for which treatment is desired. The composition comprises a synergistic combination of (1) aliphatic petroleum distillates and surfactants, or alternatively, (2) individual surfactants.

EP 0 510 954 A1

The present invention relates to the deinking of electrostatically printed paper. More particularly it relates to a composition for, and a process for enhancing the aggregation of electrostatic toner particles and allowing for the separation of the particles from pulp fibers in the deinking of electrostatically printed waste paper.

Dry toner electrostatic printing inks, including laser and xerographic inks, are important and growing contaminants in the area of waste paper recycling. Traditionally, paper has been printed with water or oil-based inks which were adequately removed by conventional deinking procedures. In these methods, secondary fiber is mechanically pulped and contacted with an aqueous medium containing a surfactant. Ink is separated from pulp fibers as a result of mechanical pulping and the action of the surfactant. The dispersed ink is separated from pulp fibers by such means as washing or flotation.

Conventional deinking processes have shown minimal success in dealing with dry toner electrostatic printing inks, with the necessary chemical and mechanical treatments of the furnish proving to be time consuming and often rendering a furnish which is unacceptable for many applications. The development of a deinking program for office waste contaminated with electrostatic printed copy will make this furnish more amenable to the recycling process.

The ability to recycle office waste will prove commercially advantageous and will have a significant impact on the conservation of virgin fiber resources. Although electrostatic printed waste has not reached the volume of impact printed waste commonly seen in the industry, indications are such that usage of electrostatic print is increasing steadily and that waste copies available to the recycling industry will also increase.

The present invention enhances the aggregation and subsequent removal of electrostatic toner particles through centrifugal cleaners by using specific commercially available raw materials. This can be accomplished at a wide range of pH levels (5.0 to 11.0) and will render a furnish that is virtually free of electrostatic printing ink after subsequent mechanical treatment. The invention allows for the separation of electrostatic toner particles and associated binder from pulp fibers, and causes the particles to aggregate to a critical range of size and density, which affords their most efficient removal from the pulp slurry by centrifugal cleaners.

The present invention demonstrates that specific surfactants with low HLBs enhance the aggregation of electrostatic toner particles, allowing removal through centrifugal cleaning and/or screening. HLB is an abbreviation for hydrophile-lipophile balance as related to the oil and water solubility of a material. A high HLB indicates that the hydrophilic portion of the molecule is dominant, while a low HLB indicates that the hydrophobic portion of the molecule is dominant. The water solubility of materials increases with increasing HLB. Traditional deinking processes utilize a wide variety of high HLB (generally greater than 10) nonionic and/or anionic surfactants or dispersants to wet and disperse ink particles to a range of size (about 0.5 to 15 microns) which allows for their most efficient subsequent removal by washing and/or froth flotation processes.

Aggregation is seen at pH levels ranging from 5.0 to 11.0, with no significant deposition of ink present on pulping equipment. The advantage of the present invention is that it allows for aggregation at an ambient pH, alleviating the need for caustic or acid tanks in the mill environment.

According to the present invention there is provided a process for enhancing the aggregation of electrostatic toner particles and allowing for separation of particles from pulp fibers in the deinking of electrostatic printed wastepaper, which comprises adding to an aqueous slurry of the electrostatic printed wastepaper surfactant with a hydrophile/lipophile balance of less than 10.

The present invention also provides a composition for enhancing the aggregation of electrostatic toner particles in the deinking of electrostatic printed wastepaper, which comprises a synergistic combination of at least two of the following components: (a) aliphatic petroleum distillates, (b) an alkylphenoxypoly-(ethyleneoxy) ethanol and (c) an ethoxylated polyoxypropylene glycol, the hydrophile/lipophile balance of both (b) and (c) being less than 10.

The components of the present invention comprise individual surfactants with hydrophile/lipophile balances usually of from about 0.5 to 10.0. These components will also be effective when combined with aliphatic petroleum distillates (solvents). (The solvents are saturated hydrocarbons having carbon numbers in the range of C9-C12). All components are commercially available.

It has now been discovered that the addition to an aqueous slurry of electrostatic printed wastepaper of a surfactant with a hydrophile/lipophile balance of from about 0.5 to 10.0 (preferably from about 0.5 - 5.0) significantly enhances the aggregation of electrostatic toner particles, allowing for their separation from fiber through centrifugal cleaning and/or screening. This aggregation takes place at pH levels ranging from 5.0 to 11.0, with no significant deposition of ink present on pulping equipment. (A pH higher than 11.0 or lower than 5.0 is also believed to be effective).

During initial testing, the phenomenon was termed agglomeration (i.e., a bringing together of particles, the surface area of the whole remaining the sum of each individual part). It is however now felt that a more accurate term to describe the phenomenon is aggregation (i.e., a changing of surface area, the total surface area being less than the sum of the individual particles). Aggregation is a result of this densification, or reduction of void

areas.

The individual surfactants (e.g., ethoxylated, propoxylated, esterified or alkanolamide) allow for aggregation at an ambient pH, alleviating the need for caustic or acid tanks in the mill environment. The raw materials which are effective in this invention include:

1. Alkylphenol ethoxylates (Alkylphenoxypoly-(ethyleneoxy) ethanols)
2. Block copolymers of ethylene oxide and propylene oxide
3. Alcohol ethoxylates
4. Glycerol esters
5. Alkoxylated fatty esters
6. Sorbitan esters
7. Fatty acid alkanolamides
8. Amine ethoxylates
9. Dimethylpolyoloxane alkoxylates

The chemical structures of exemplary raw materials are as follows:

Alkylghenol ethoxylates

Ethoxylated Octylphenols

$$C_8H_{17}\text{-}C_6H_4O(CH_2CH_2O)_nH$$
$$n = 1 - 6$$

Ethoxylated Nonylphenols

$$C_9H_{19}\text{-}C_6H_4O(CH_2CH_2O)_nH$$
$$n = 1 - 6$$

Dodecylphenol Ethoxylates

$$C_{12}H_{25}\text{-}C_6H_4O(CH_2CH_2O)_nH$$
$$n = 1 - 6$$

Dialkylphenol Ethoxylates

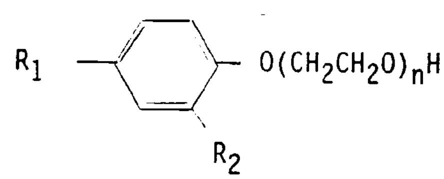

$$n = 1 - 9$$
$$R_1, R_2 = C_8H_{17}, C_9H_{19} \text{ or } C_{12}H_{25}$$

Block copolymers of ethylene oxide and propylene oxide

Ethoxylated Polyoxypropylene Glycols

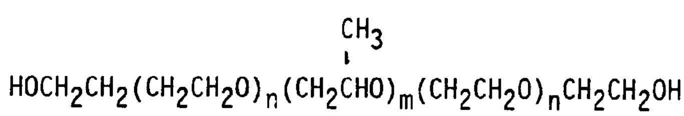

$$n = 1 - 45$$
$$m = 14 - 77$$

Propoxylated Polyoxyethylene Glycols

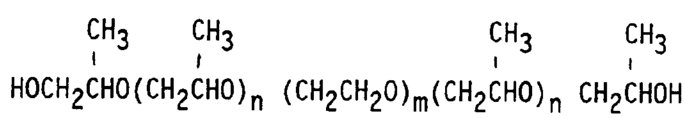

$$n = 14 - 77$$

m = 1 - 45

Alcohol Ethoxylates

Primary Alcohol Ethoxylates

$$CH_3\text{-}(CH_2)_x\text{-}CH_2O(CH_2CH_2O)_nH$$

x = 4 - 16

n = 1 - 10

Secondary Alcohol Ethoxylates

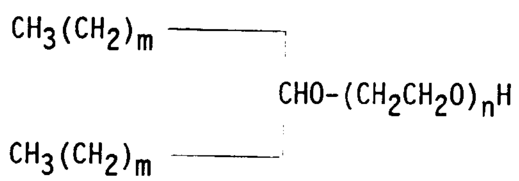

n = 1 - 8

m = 9 - 12

Glycerol Esters

Glycerol Esters of Fatty Acids

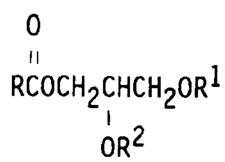

R, $R^1$, $R^2$= caprylic, capric, lauric, myristic, palmitic, palmitoleic, stearic, oleic, linoleic, linolenic, alpha-eleostearic, ricinoleic, gadoleic, arachidonic, behenic, pelargonic, iso-oleic, iso-stearic

$R^1$, $R^2$ = -H

Alkoxylated Fatty Esters

Ethoxylated Fatty Esters

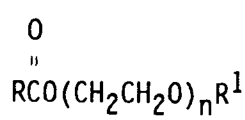

n = 1 - 9

R, $R^1$ = caprylic, capric, lauric, myristic, palmitic, palmitoleic, stearic, oleic, linoleic, linolenic, alphaeleostearic, ricinoleic, gadoleic, arachidonic, behenic, pelargonic, iso-oleic, iso-stearic

$R^1$ = -H

Propoxylated Fatty Esters

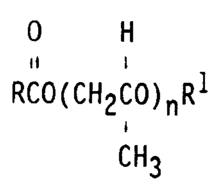

n = 1 - 10

R, $R^1$ = caprylic, capric, lauric, myristic, palmitic, palmitoleic, stearic, oleic, linoleic, linolenic, alphaeleostearic, ricinoleic, gadoleic, arachidonic, behenic, pelargonic, iso-oleic, iso-stearic

$R^1$ = H

Sorbitan Esters

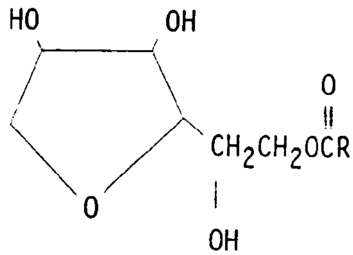

R = caprylic, capric, lauric, myristic, palmitic, palmitoleic, stearic, oleic, linoleic, linolenic, alpha-eleostearic, ricinoleic, gadoleic, arachidonic, behenic, pelargonic, iso-oleic, iso-stearic

Fatty Acid Alkanolamides

Fatty Acid Diethanolamides

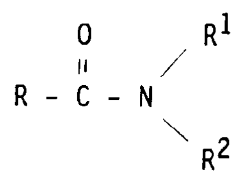

R = caprylic, capric, lauric, myristic, palmitic, palmitoleic, stearic, oleic, linoleic, linolenic, alpha-eleostearic, ricinoleic, gadoleic, arachidonic, behenic, pelargonic, iso-oleic, iso-stearic

$R^1, R^2 = -H, -CH_2CH_2OH,$

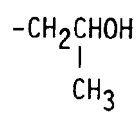

Amine Ethoxylates

Ethoxylated Tertiary Amines

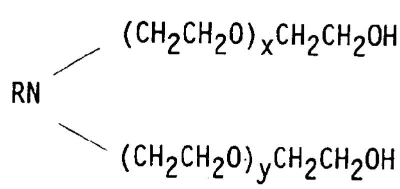

R = caprylic, capric, lauric, myristic, palmitic, palmitoleic, stearic, oleic, linoleic, linolenic, alpha-eleostearic, ricinoleic, gadoleic, arachidonic, behenic, pelargonic, iso-oleic, iso-stearic, rosin

x = 1 - 6

y = 1 - 6

Dimethylpolysiloxane ethoxylates and propoxylates (molecular weight = 600 - 20,000), as well as sorbitan ester ethoxylates are also effective surfactants in the aggregation of electrostatic toner particles.

For the application of electrostatic toner particle aggregation, the effective hydrophile - lipophile balance of the tested surfactants is from about 0.5 to 10, preferably from about 0.5 to about 5. It is believed that the effective temperature range for the aggregation of electrostatic toner particles is from 43°C to 88°C (110°F to 190°F).

A beaker test method was utilized to determine the impact of various raw materials on toner aggregation without the presence of fiber. This method allowed for the visual evaluation of toner configuration after treatment and permitted the particles to be sized using the Brinkmann Particle Size Analyzer. When raw materials were screened using this method, those demonstrating significant particle aggregation were advanced to the Deinking/Repulping Apparatus (the pulper) for an evaluation of performance in the presence of fiber.

The experimental procedure was as follows:

Approximately 0.01 grams of toner was added to a beaker containing 100 milliliters of deionized water. Each solution of toner and water was mixed on a magnetic stirrer at a pH of 7.0, a temperature of 66°C (150°F) and a contact time of 60 minutes. About 514 parts of raw material per million parts of solution was added to the beaker. Upon completion of contact time, particle configurations were noted, and solutions were filtered and held for size evaluation using the Brinkmann Particle Size Analyzer.

The pulper was then used to evaluate selected raw materials. This apparatus consists of a Waring blender jar with the blades reversed to provide a mixing action of the fibers. The stirring of the blender is controlled by a motor connected to a Servodyne controller. Temperature of the pulp in the blender is provided by a heating mat attached to a temperature controller. The typical furnish consistency in the laboratory pulper is 5%, and a stirring speed of 750 rpm is used to simulate the mechanical action of a hydropulper.

Electrostatic printed wood-free fiber was used as the furnish. Ten grams of raw material per kilogram of fiber (20 pounds per ton) were added to the pulper (2.5 to 10 grams material/kilogram (5 to 20 pounds per ton) of fiber the preferred range, 5 to 10 grams/kilogram (10 to 20 lbs per ton) most preferred) at a temperature of 66°C (150°F), a pH of 7.0, and a pulping time of 60 minutes. In Table 1, toner particle aggregation or the lack thereof through the use of individual surfactants is listed.

TABLE 1
Toner Particle Aggregation

| FUNCTIONAL GROUP | HLB | TONER PARTICLE APPEARANCE * | | |
|---|---|---|---|---|
| Ethoxylated Octylphenols | 3.6 | aggregated | n=1.5 | |
| | 15.8 | no effect | n=10.0 | |
| Ethoxylated Nonylphenols | 4.6 | aggregated | n=1.5 | |
| | 12.9 | no effect | n=9.5 | |
| | 17.2 | no effect | n=49 | |
| Ethoxylated Polyoxy-propylene Glycols | 0.5 | aggregated | n=9 | m=69 |
| | 1.0 | aggregated | n=13 | m=56 |
| | 18.5 | no effect | n=3 | m=15 |
| | 1.0 | aggregated | n=13 | m=56 |
| | 12.0 | no effect | n=3 | m=16 |
| Primary Alcohol Ethoxylates | 4.6 | aggregated | n=2.0 | x=16 |
| | 12.2 | no effect | n=9.0 | x=16 |
| | 6.0 | aggregated | n=4.0 | x=6-8 |
| Glycerol Esters of Fatty Acids | 0.8 | aggregated | R=R'=Oleic | |
| | 1.6 | aggregated | R=Oleic, R'= H | |
| | 2.5 | aggregated | R=Oleic, R'= H | |
| | 2.7 | aggregated | R=Oleic, R'= H | |
| | 2.7 | aggregated | R=Stearic, R'= H | |
| | 2.9 | aggregated | R=Isostearic, R'= H | |
| | 2.8 | aggregated | R,R'=Fatty Acid | |
| Ethoxylated Fatty Esters | 8.0 | aggregated | n=5 | R=Oleic, R'= H |
| | 13.5 | no effect | n=14 | R=Oleic, R'= H |
| | 2.0 | aggregated | n=1 | R=Stearic, R'= H |
| | 3.0 | aggregated | n=1 | R=Stearic, R'= H |
| | 18.0 | no effect | n=40 | R=Stearic, R'= H |

TABLE 1 (Cont'd)

| FUNCTIONAL GROUP | HLB | TONER PARTICLE APPEARANCE * | |
|---|---|---|---|
| Propoxylated Fatty Esters | 1.8 | aggregated | R = Stearic, R' = H(monoester) |
| | 1.8 | aggregated | R = Stearic, R' = H & Stearic (at least 95% monoester) |
| | 3.5 | aggregated | R = Stearic, R' = H & Stearic (at least 67% monoester) |
| Sorbitan Esters | 1.8 | aggregated | R = Trioleic |
| | 2.1 | aggregated | R = Tristearic |
| | 2.7 | aggregated | R = Sesquioleic |
| | 14.9 | no effect | R = Stearic |
| Fatty Acid Diethanol-amides | 1-7 | aggregated | R = Oleic $R' = H$, $R_2 = CH_2\overset{CH_3}{C}HOH$ |
| | > 10.0 | no effect | R = Coco $R' = R^2 = CH_2CH_2OH$ |
| | > 10.0 | no effect | R = Coco $R' = R^2 = CH_2CH_2OH$ |
| Ethoxylated Tertiary Amines | 5.0 | aggregated | R = tallow $x + y = 2$ |
| | 12.0 | no effect | R = tallow $x + y = 7$ |
| Organic Phosphate Esters | 13 - 15 | no effect | |
| | 13 - 15 | no effect | |
| Polyethoxylated and propoxylated polydimethyl siloxanes | 5.0 | aggregated | |
| | 9.0 | aggregated | |
| | 17.0 | no effect | |

* aggregation: particle size > approx. 10 microns
no effect: particle size < approx. 10 microns

It has also been found that a combination of (1) aliphatic petroleum distillates, (2) an alkylphenoxypoly-(ethyleneoxy) ethanol and (3) an ethoxylated polyoxypropylene glycol significantly enhances the aggregation of electrostatic toner particles, allowing for their separation from fiber through centrifugal cleaning and/or screening.

The laboratory results found in Table 2 demonstrate the effectiveness of this combination. A nonylphenoxypoly-(ethyleneoxy) ethanol with a molecular weight of 286 and an ethoxylated polyoxypropylene glycol with a molecular weight of 3800 are preferred components. Ten grams of raw material or experimental product per kilogram (20 pounds per ton) of fiber were added to the pulper. Electrostatic printed wood-free fiber was used as the furnish. (The same experimental procedure as previously described, including use of the beaker test method, was employed here).

TABLE 2

Pulper Results at 66°C (150°F), pH 7.0, 60 Minute Pulping Time

| Condition | Particle Size ($mm^2$) |
|---|---|
| Untreated Control | 0.479 |
| Aliphatic Solvent (A) | 6.162 |
| Nonylphenoxypoly-(ethyleneoxy) ethanol (B, Mol. Wt. = 286, HLB = 4.6) | 16.299 |
| Ethoxylated polyoxypropylene glycol (C, Mol. Wt. = 3800, HLB = 1.0) | 18.463 |
| Formulation (60%A : 10%B : 30%C) | 48.947 |

(A nonylphenoxypoly-(ethyleneoxy) ethanol is equivalent to an ethoxylated nonylphenol).

Note the effectiveness of each material (e.g., B and C) in increasing electrostatic toner particle size, as compared to the untreated control. However, the experimental formulation in its preferred ratios (60% A/ 10% B/ 30% C) showed a significant increase in particle size as compared to individual components.

Additional testing was carried out on furnish blends of various dry toner electrostatic printing copy types. The laboratory repulping/deinking apparatus was used to evaluate the performance of two component and three component material blends on electrostatic toner particle aggregation. Pulping conditions were: 66°C (150°F), 10 grams of material per kilogram (20 pounds per ton) of fiber, 45 minutes of pulping time, and pHs of 5.0, 8.0 and 11.0.

Particle size (diameter in microns) and density (grams/cc) were then determined, based on the mean of 10 particles.

A particle density greater than that of water (approximately 1 g/cc) is needed for any separation of material from water and paper fiber. For particles of equal density, the particle with a larger diameter has a greater chance of being removed with cleaning.

The performance of a cleaner may be measured in terms of its ability to remove dirt particles:

$$\%\ \text{Cleaning Efficiency} = \frac{\text{Dirt Count}_{(feed)} - \text{Dirt Count}_{(accept)} \cdot 100}{\text{Dirt Count}_{(feed)}}$$

A plot of mean particle density versus percent cleaning efficiency for previous pilot cleaner runs and the resulting equation of the curve were used to predict the percent cleaning efficiency expected for the particles generated in each run.

The following results demonstrate the effectiveness of the present invention, in terms of the synergistic effect achieved by combining various components. Note that synergistic results may not always be achieved depending on changes in e.g., pH, furnish, etc. Components A, B and C are the same as used in Table 2.

TABLE 3

Effect of Treatment on Particle Size, Density and Predicted % Cleaning Efficiency at pH 5.0

| Treatment | Particle Size Diameter (microns) | Density (g/cc) | Predicted % Cleaning Efficiency |
|---|---|---|---|
| Control | 432 | 0.92 | 49.74 |
| Aliphatic Solvent (A) | 1368 | 1.02 | 77.63 |
| Nonylphenoxypoly-(ethyleneoxy) ethanol (B) | 2422 | 1.03 | 80.42 |
| Ethoxylated Polyoxypropylene Glycol (C) | 494 | 1.00 | 72.05 |
| 50%A/50%B | 1086 | 1.06 | 88.79 |
| 50%A/50%C | 2186 | 1.04 | 83.21 |
| 16.7%A/66.7%B/16.7%C | 1578 | 1.05 | 86.00 |
| 30%A/40%B/30%C | 1326 | 1.06 | 88.79 |
| 25%A/25%B/50%C | 732 | 1.08 | 94.37 |

TABLE 4

Effect of Treatment on Particle Size, Density and Predicted % Cleaning Efficiency at pH 8.0

| Treatment | Particle Size Diameter (microns) | Density (g/cc) | Predicted % Cleaning Efficiency |
|---|---|---|---|
| Control | 364 | 0.87 | 35.79 |
| Aliphatic Solvent (A) | 1513 | 1.02 | 77.63 |
| Nonylphenoxypoly-(ethyleneoxy) ethanol (B) | 2714 | 1.03 | 80.42 |
| Ethoxylated Polyoxypropylene Glycol (C) | 494 | 0.88 | 38.58 |
| 50%A/50%B | 718 | 1.08 | 94.37 |
| 50%A/50%C | 2634 | 1.06 | 88.79 |
| 50%B/50%C | 772 | 1.04 | 83.21 |
| 16.7%A/16.7%B/66.7%C | 1024 | 1.07 | 91.58 |
| 16.7%A/66.7%B/16.7%C | 1986 | 1.04 | 83.21 |
| 30%A/40%B/30%C | 1736 | 1.04 | 83.21 |
| 25%A/25%B/50%C | 646 | 1.08 | 94.37 |

TABLE 5

Effect of Treatment on Particle Size, Density and Predicted % Cleaning Efficiency at pH 11.0

| Treatment | Particle Size Diameter (microns) | Density (g/cc) | Predicted % Cleaning Efficiency |
|---|---|---|---|
| Control | 268 | 0.84 | 24.73 |
| Aliphatic Solvent (A) | 1296 | 1.02 | 77.63 |
| Nonylphenoxypoly-(ethyleneoxy) ethanol (B) | 3425 | 1.01 | 74.84 |
| Ethoxylated Polyoxypropylene Glycol (C) | 632 | 1.02 | 77.63 |
| 50%A/50%B | 893 | 1.03 | 80.42 |
| 30%A/40%B/30%C | 3384 | 1.05 | 86.01 |
| 25%A/25%B/50%C | 1331 | 1.07 | 91.59 |

(Note: A different furnish was used at pH 11.0 then at pH's of 5.0 and 8.0. Combinations of components tested with the original furnish at pH 11.0 did not produce synergistic results. It is considered that factors such as, for example, toner type used may have contributed to this outcome).

## Claims

1. A process for enhancing the aggregation of electrostatic toner particles and allowing for separation of particles from pulp fibers in the deinking of electrostatic printed wastepaper, which comprises adding to an aqueous slurry of the electrostatic printed wastepaper surfactant with a hydrophile/lipophile balance of less than 10.

2. A process according to claim 1, wherein the hydrophile/lipophile balance is from about 0.5 to 10.

3. A process according to claim 2, wherein the hydrophile/lipophile balance is from about 0.5 to 5.

4. A process according to any of claims 1 to 3, wherein aggregation of electrostatic toner particles occurs at a temperature of about 43°C to 88°C (110°F to 190°F).

5. A process according to any of claims 1 to 4, wherein aggregation of electrostatic toner particles occurs at a pH of about 5.0 to 12.0.

6. A process according to any of claims 1 to 5, wherein about 2.5 to 10 grams of surfactant per kilogram (5 to 20 pounds per ton) of fiber is added to the aqueous slurry of electrostatic printed wastepaper.

7. A process according to any of claims 1 to 6, wherein aliphatic petroleum distillates are combined with the surfactant.

8. A process according to claim 7, wherein the aliphatic petroleum distillates are saturated hydrocarbons having carbon numbers in the range of C9 - C12.

9. A process according to any of claims 1 to 8, wherein the surfactant is selected from an ethoxylated surfactant, propoxylated surfactant, esterified surfactant and alkanolamide surfactant.

10. A process according to claim 9, wherein the ethoxylated surfactant is selected from alkylphenol ethoxylates, block copolymers of ethylene oxide, alcohol ethoxylates, amine ethoxylates and dimethylpolysiloxane ethoxylates.

11. A process according to claim 10, wherein the alkyl- phenol ethoxylates are selected from ethoxylated octylphenols, ethoxylated nonylphenols, dodecylphenol ethoxylates and dialkylphenol ethoxylates.

12. A process according to claim 10, wherein the block copolymers of ethylene oxide are ethoxylated polyoxypropylene glycols.

13. A process according to claim 10, wherein the alcohol ethoxylates are primary or secondary.

14. A process according to claim 10, wherein the amine ethoxylates are tertiary.

15. A process according to claim 9, wherein the propoxylated surfactant is a block copolymer of propylene oxide.

16. A process according to claim 15, wherein the block copolymer of propylene oxide is a propoxylated polyoxyethylene glycol.

17. A process according to claim 9, wherein the esterified surfactant is selected from alkoxylated fatty esters, glycerol esters and sorbitan esters.

18. A process according to claim 17, wherein the alkoxylated fatty ester is ethoxylated or propoxylated.

19. A process according to claim 9, wherein the alkanolamide surfactant is a fatty acid alkanolamide.

20. A process according to any of claims 1 to 8, wherein there is added to an aqueous slurry of the electrostatic printed wastepaper a synergistic combination of at least two of the following components: (a) aliphatic petroleum distillates, (b) an alkylphenoxypoly-(ethyleneoxy) ethanol and (c) an ethoxylated polyoxypropylene glycol, the hydrophile/lipophile balance of both (b) and (c) being less than 10.

21. A process according to claim 20, wherein the alkylphenoxypoly-(ethyleneoxy) ethanol is a compound of the formula

$$C_9H_{19}\text{-}C_6H_40(CH_2CH_20)_nH$$

with n from about 1 to 6.

22. A process according to claim 20 or 21, wherein the ethoxylated polyoxypropylene glycol is a compound of the formula

$$HOCH_2CH_2(CH_2CH_2O)_n(CH_2\overset{\overset{CH_3}{|}}{C}HO)_m(CH_2CH_2O)_nCH_2CH_2OH$$

with n from about 1 to 45 and m from about 14 to 77.

23. A process according to any of claims 20 to 22, wherein (a) constitutes from about 16 to 60% of the combination.

24. A process according to any of claims 20 to 23, wherein (b) constitutes from about 10 to 67% of the combination.

**25.** A process according to any of claims 20 to 24, wherein (c) constitutes from about 16 to 67% of the combination.

**26.** A process according to any of claims 20 to 25, wherein the weight ratio of (a):(b):(c) is about 6:1:3.

**27.** A composition for enhancing the aggregation of electrostatic toner particles in the deinking of electrostatic printed wastepaper, which comprises a synergistic combination of at least two of the following components: (a) aliphatic petroleum distillates, (b) an alkylphenoxypoly-(ethyleneoxy) ethanol and (c) an ethoxylated polyoxypropylene glycol, the hydrophile/lipophile balance of both (b) and (c) being less than 10.

**28.** A composition according to claim 27, wherein the hydrophile/lipophile balance of both (b) and (c) is as defined in claim 2 or 3.

**29.** A composition according to claim 27 or 28, wherein the aliphatic petroleum distillates are saturated hydrocarbons having carbon numbers in the range of C9 - C12.

**30.** A composition according to any of claims 27 to 29, wherein the components (a), (b) and (c) are as defined in any of claims 21 to 26.

European Patent Office

# EUROPEAN SEARCH REPORT

Application Number

EP 92 30 3628

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 307 024 (AKZO N. V.)<br>* claims * | 1,4,5,9 | D21C5/02 |
| A | | 2,3,17 | |
| | --- | | |
| Y | US-A-4 561 993 (WOOD ET AL.)<br>* the whole document * | 1,4,5,9 | |
| A | | 10,13 | |
| | --- | | |
| A | US-A-3 501 373 (ILLINGWORTH, R.H. ET AL.)<br>* column 2, line 53 - column 4, line 30 * | 1,4-11, 20,21, 23,24, 27,29,30 | |
| | ----- | | |
| | | | TECHNICAL FIELDS SEARCHED (Int. Cl.5 ) |
| | | | D21C |

The present search report has been drawn up for all claims

| Place of search | Date of completion of the search | Examiner |
|---|---|---|
| THE HAGUE | 04 AUGUST 1992 | BERNARDO NORIEGA F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)